# EUROPEAN PATENT SPECIFICATION

(11) **EP 2 110 365 B1**
(45) Date of publication and mention of the grant of the patent: **05.10.2016**
(21) Application number: 08103612.1
(22) Date of filing: 18.04.2008
(51) Int. Cl.: C03C 8/02

(54) **Fish scale free enamelling of non-enamellable steel sheet**
Fischschuppenfreie Emailierung eines nicht emaillierbaren Stahlblechs
Émaillage sans écaille d'une plaque d'acier non émaillable

(43) Date of publication of application: 21.10.2009
(73) Proprietor: Prince Belgium BVBA, 8000 Brugge (BE)
(72) Inventor: Duchamp, Vincent, 59230 Haubourdin (FR); Lips, Koen, 9031 Gent (BE)
(74) Representative: dompatent von Kreisler Selting Werner - Partnerschaft von Patent- und Rechtsanwälten mbB

(56) References cited:
- EP-A- 0 018 559
- EP-A- 0 089 418
- FR-A- 2 784 696
- US-A- 4 847 218
- US-A- 5 512 521
- US-A- 6 001 494
- US-B1- 6 177 201

## Description

The present invention relates to glass compositions suitable for porcelain enamel application on non-enamellable steel quality and thereby providing a coating free of fish scale defects or any defects generated by hydrogen.

An enamel frit used according to the present invention is a glass containing specified silicates and oxides. It has been melted at a temperature in the range of 1100°C to 1600°C quenched in water or between rolls.

An enamel composition used according to the present invention is a mix of enamel frits with other enamel frits and/or milling/blending additions. This mix can be wet or dry milled, blended in water or dry blended with oils for electrostatic depositions.

NiO_{c} according to the present invention is defined as crystalline nickel oxide as milling addition to the enamel composition.

NiO according to the present invention is nickel oxide melted into the enamel frit. Said NiO is part of the glass structure.

Transition metal oxide according to the present invention is the oxide of an element whose atom has an incomplete d sub-shell, or which can give rise to cations with an incomplete d sub-shell with exclusion of the elements of group IV

Vitreous enamelled coated bolted steel tanks / silos are on the market for around 50 years. They are used for the storage of a high variety of liquids, slurries and dry bulk products in municipal and industrial areas. Thanks to the very good chemical resistance of the vitreous enamels and the flexible and quick construction, not obtained by other silo technologies, there is a growing interest for enamelled tanks / silos. The complete production process of the panels is reviewed, including steel requirements, enamel properties and final product quality. The development of a new family of enamels for the fish scale free enamelling of non enamellable construction steel is discussed.

During the last decade, the use of vitreous enamel for industrial applications has grown a lot and this application area became the second largest enamel consuming market after the household appliances.

Industrial applications of vitreous enamel are hot water tanks, silos/tanks, heat exchangers and chemical vessels. For these products, the vitreous enamelled steel is chosen from an engineering point of view because of the combination of following excellent technical properties:
- Inorganic chemical resistance over a wide pH-range
- Excellent organic chemical resistance.
- Temperature resistance till high temperatures
- Very smooth, non reactive and non sticky surface
- Scratch and abrasion resistance
- Physiological safe
- No bacteriological growth
- Strength of the enamelled steel

Different from hot water tanks, heat exchangers and chemical vessels, the surface of the silos/tanks is visible during use. For this reason besides of the technical properties, which are the most important, there also is the esthetical aspect of the colour.

Bolted steel tanks/silos are made in two steps: the vitreous enamelled panels are shaped, enamelled and carefully packed in the enamel work shop and the tank/silo itself is erected in situ. In this way, the silo/tank is very fast constructed. This is a big advantage against concrete silos/tanks. Another practical advantage is the possibility to remodel, extend and dismantle a bolted silo/tank.

Besides of the wall panels, it is also possible to enamel floor panels and roof panels. In this way, the complete silo/tank is made out of the same material.

Bolted silos/tanks can be created with diameters till 100m and heights till 50m; average sizes are 6 m diameter and 6 m height. The erection of the silos can be done with an erection platform or with jacks (i.e. the silo is constructed ring by ring on the ground and is jacked up every time a ring is finished - especially used for roofed tanks.

The edges of the panels have to be carefully enamelled in order not to have enamel defects. For this reason the edges of thick gage sheet are rounded. Sometimes, sealants are used on the edges to overcome corrosion. The sealant has to be resistant against the used medium in the silo.

The used bolts are normally made out of stainless steel or galvanised steel, depending on the used medium and the needed strength.

Besides of vitreous enamelled steel panels, bolted silos/tanks are also made out of organic coated steel panels, galvanised steel panels, aluminium panels, stainless steel panels. But non of these alternatives gives the same excellent combination of properties as vitreous enamelled steel panels, and for this reason the vitreous enamelled panels are used for a wide range of silo/tank applications : from the dry storage of animal feed, over the storage of potable water till the use for digesters and storage of aggressive industrial effluents.

For every silo/tank, an engineering study has to be made taking into account the specifications of the medium and its temperature, the environmental conditions (wind, seismic, snow, ice, temperature range), the usage and planned dimensions of the tank, location of openings, attached equipments, etc. Out of this input, the required steel thickness/properties and the required enamel quality for the different panels are determined.

There exist a lot of standards that are dealing with the required properties of the enamel coating of bolted steel silos/tanks. The following ones being the most important:
The ISO 4528 : vitreous and porcelain enamel finishes - selection of test methods for vitreous and porcelain enamelled areas of articles, mentions the properties (and corresponding standards) that are important for both silos and tanks, but without giving minimum requirements for those properties.

The EEA (European Enamel Authority) Quality Requirements specifies in §7.20 the minimum requirements for enamelled industrial tanks and in §7.24 - 25 the minimum requirements for enamelled silos for animal feed and for dung.

The new European standard EN15282 - 2007: vitreous and porcelain enamels - design of bolted steel tanks for the storage or treatment of water or municipal or industrial effluents and sludges, specifies all the requirements for the design of bolted cylindrical steel tanks and the minimum requirements for the enamel coating for the different liquid storage tank applications.

In the above mentioned standards, the following quality requirements for the vitreous enamel coating are specified: the resistance to chemical corrosion by different acid and alkaline solutions, the thermal shock resistance, the impact resistance, the abrasion resistance, the scratch hardness, the adherence, the enamel layer thickness, the defects in the enamel layer and the colour.

Depending on the required properties, different enamel coatings are used, ranging from a direct on enamel coating with good chemical resistance towards a 3 coat system with a top coat that has a perfect chemical resistance in the range pH 1 to 14. The total layer thickness varies correspondingly with the number of coatings. One has to avoid excessive layer thickness at the borders and around the bolt holes, in order to avoid cracks and chipping off during the construction and the bolting of the panels. The enamel is mostly applied by wet spraying or dry electrostatic powdering.

Construction steel sheet is normally produced by hot rolling and does not have any fish scale resistance. For the production of hot water tanks, that are only enamelled one side, this is not causing problems because the hydrogen release can take place at the outside surface of the steel sheet of the hot water tank, so that no fish scales occur in the enamel layer at the inside. Bolted tanks and silos panels are both side enamelled and so, there is a need for both side enamellable high strength hot rolled steel sheet. This is very difficult to obtain because of the fact that no micro-voids can be created during hot rolling. It are especially those micro-voids, that are created during the cold rolling, that suppress the fish scale formation of the widely used low carbon enamellable cold rolled steel qualities. For the hot rolled steel, other metallurgical possibilities have to be used. During the last decades, a lot of steel suppliers have performed research for such steel qualities; almost always, the metallurgists are using titanium additions and are controlling carefully the ratio of titanium, nitrogen, sulphur and carbon. The purpose is to have less austenite (which can contain much more hydrogen) during the enamel firing and to create preferable Ti-precipitates during the hot rolling process. Although that the research results are very promising, it is very difficult to produce these qualities with homogeneous properties and so, only very few steel suppliers have these steel qualities in their assortment. And the price of these difficult producible steel sheets is correspondingly high.

Some manufacturers of vitreous enamelled steel panels are using such Ti-added hot rolled construction steel sheet successfully, the others are buying non-enamellable construction steel and are using special pre-treatment or enamel slip to avoid fish scaling.

Besides of the fish scaling problematic, one should also keep in mind that the mechanical properties of the bought steel change during the firing of the enamel layer(s). The firing, which can be compared with an annealing of the steel, diminishes the strength of the steel panel. This can be very drastically. And it are these strength properties after firing that need to fulfil the calculated minimum mechanical requirements of the panels. For this reason, one should best order a steel quality with guaranteed mechanical properties after annealing.

The steel panels need to be pre-treated before enamelling. The black iron oxide formed during the hot rolling has to be removed. This can take place in the steel plant by pickling, or can be done in the enamel shop, where both, pickling or shot blasting can be used. The advantage of shot blasting is that there is a better contact area between steel and enamel, resulting in a better reaction during firing.

If the pickling takes place in the steel shop, the sheets are normally corrosion protected. This oil film as well as the lubricants used during the panel fabrication has to be removed before enamelling in order to avoid enamel defects.

Porcelain enamels are the coatings of choice for various metal substrates. These enamels in the form of wet slips or dry powders are applied for example to steel substrates which subsequently are subjected to high temperature firing to provide a smooth porcelain enamel coating. Depending on the specific requirements for certain applications, porcelain enamels can protect metal substrates from corrosion, oxidation and abrasion. They also can form an aesthetic surface on the metal substrate to provide desirable colour, gloss; and unique surface texture.

Traditionally, porcelain enamels have been divided into ground coat and cover coats. A ground coat serves as an intermediate layer providing a bond between the base metal substrate and the cover coat. A cover coat is designed to provide colour and surface characteristics that are combined with other required physical and/or chemical properties. It is highly desirable to combine the functionalities of both ground coat and cover coat into one single coat. In particular for chemical resistant ground coats are applied to the substrate.

Traditionally when porcelain enamel is applied on both sides of the steel substrate, fish scaling may occur. It is known that during firing of the porcelain enamel on the metallic substrate at elevated temperature, water or moisture from a number of sources reacts with the substrate to form hydrogen. During the high temperature firing, such atomic hydrogen penetrates into the steel substrate. At high temperature hydrogen is highly soluble and mobile in the steel structure. During cooling the porcelain enamel coating solidifies. The hydrogen being less soluble in the steel at decreasing temperature, is discharged and builds up a pressure at the porcelain enamel/steel interface. When a metallic substrate is coated on one side, hydrogen can find a free way through the uncoated side. However, when both sides of a standard steel substrate are coated, simultaneously or sequentially the result is that the coating cracks and/or chipps off under the pressure of the trapped hydrogen. These defects are known as "fish scales".

Various technologies have been developed to avoid fish scale defects generated by hydrogen.

In order to avoid fish scale defects, steel producers have developed enameling grade steels. These enameling grade steels are able to block hydrogen in physical and/or chemical traps.
- Physical traps are cavities generated in the steel structure around precipitates during cold rolling of steel.
- Chemical traps are chemical species such as titanium or niobium being added to the steel composition and forming stable compounds with hydrogen.

Said enameling grade steels are defined in EU standard EN10209. Other possible ways to avoid fish scale defects is to create hydrogen physical traps in the enamel coating:
- Protonic conductors mixed in the enamel coating are described in patent FR-A-98 12912. The addition of products having a protonic conductivity higher than 10⁻⁶ S.cm⁻¹ at 300°C is reducing the sensitivity to fish scaling defects. These protonic conductors can be β, β', β" alumina or β or β" gallium oxide. The products are added to the enamel composition at 2% to 25 weight % and are increasing the hydrogen permeability at 300°C. Aluminium oxide however, being used as mill additive in porcelain enamel is giving bad acid resistance of the coating, therefore limiting the usage of this technology. Disadvantage of this method is that Galium oxide is to expensive, therefore the use of this technology is limited and not used in practice.
- Crystalline nickel oxide mixed in the enamel coating is described in patents US-A-2,940,865 and US-A-6,177,201. Nickelous oxide (NiO_{c}) makes up from 2% to 10 weight% of the total solids in the ground coat. It is not smelted into or part of the ground coat frit. The enamel slurry is applied directly on the steel surface in a single coat or in multi layers. Although Nickel oxide (NiO_{c}) being carcinogen, using nickel oxide (NiO_{c}) is possible under restricted conditions, therefore industrial usage is limited. Said document explicitly explains that NiO melted into the frit does not bring the effect of fish scale resistance. The disadvantage of this method is the fact that crystalline NiO_{c} (CAS No 1313-99-1) is carcinogenic (Carc. Cat.1; Danger Symbol T; R43-49-53 after the European directive 1967/548/EG An. I) and the storage of NiO_{c} is only possible under restricted conditions (SEVESO II-directive 96/82/EG).
- Applying an alkaline phosphate slip, rich in nickel oxide (NiO_{c}), to the steel surface as a pre-treatment. Here also the use of carcinogenic NiO_{c} is restricting the use of this method.

EP 0 018 559 A1 discloses an enamel frit for direct enamelling of iron, mild steel, cold rolled steel etc. The frit has a particularly good adhesion to the steel surface without developing defects such as pores, black dots, fish scales etc. The frit contains in weight -%:
SiO₂ 25 -45
Na₂O 10 - 30
Li₂O 0 - 5
B₂O₃ 0 -30
CaO 5 - 20
CoO 0 - 8
NiO 0 - 8
CuO 0 -6
F 0 -5

The object of the invention relates to porcelain enamel frits designed to avoid fish scaling defects, and formulations containing these frits.

The aforementioned object of the invention is solved by the use of a borosilicate glass composition suitable for porcelain enamel applications according to claim 1.

The porcelain enamel frits and compositions containing these frits may be applied on any steel substrate. Non enameling grade steels may be coated with the porcelain enamel frits or compositions and are not exhibiting any fish scale defect.

The porcelain enamel frits and compositions may be applied by way of all wet or dry process, in a single layer or in a multi layer process.

The ground coat porcelain enamel used according to the present invention is applied on the metallic substrate in the form of wet slips or dry powders. The ground coat porcelain enamel may be applied by any method, for example wet slip spraying, dipping, flow coating, electrophoresis, or electrostatic dry powder spraying. The ground coat porcelain enamel may be applied as single coat or as a multi layer coat, where the ground coat is applied directly on the metallic substrate and one or several cover coats are applied on top of the ground coat prior to high temperature firing.

The metallic substrate is coated on both sides.

The porcelain enamel frits and compositions used may be in particular applied on pre treated steel. Pre treatment may be degreasing, acid pickling, blasting or any well known combination.

The present invention does not require the use of milling additives being carcinogen such as nickelous oxide (NiO_{c}) or milling additives such as alumina being detrimental to the enamel / steel bond or the chemical resistance of the coating.

The composition used is containing a minimum of 20 weight % of the porcelain enamel frit as defined above. The remaining constituents being other frits and/or milling additions except those producing fish scale effect with different compositions.

### Examples.

In the examples all values relate to parts per weight unless otherwise specified.

### Preparation of the porcelain enamel frits:

The various porcelain enamel frits were prepared by mixing and melting the appropriate starting materials in an electric melting furnace. After the melting process the particular glass melt was quenched between water cooled rolls. The melting process was carried out at 1200°C to 1250°C for 20 to 30 minutes. The compositions of the molten porcelain enamel frits can be taken from Table 1 and 2.

**Table 1: Inventive porcelain enamel frits**

| Elements | Frit A | Frit B |
|---|---|---|
| Li₂O | 2,0 | 2,0 |
| Na₂O | 27,3 | 23,1 |
| CaO | - | 3,0 |
| B₂O₃ | 10,6 | 10,5 |
| SiO₂ | 52,9 | 43,8 |
| ZrO₂ | - | 9,1 |
| F | - | 2,0 |
| NiO | 7,2 | 7,1 |
| CoO | - | 0,1 |
| CuO | - | 0,1 |
| Total | 100,0 | 100,8 |

**Table 2: Existing frits according to the prior art**

| Elements | Frit C | Frit D | Frit E | Frit F | Frit G |
|---|---|---|---|---|---|
| Li₂O | - | - | 6 | 3,3 | 2,2 |
| Na₂O | 14,4 | 14,0 | 8,5 | 15,3 | 16,4 |
| K₂O | 2,0 | 2,6 | 0,5 | - | 1,0 |
| CaO | 5,9 | 2,0 | 3,5 | 3,4 | - |
| BaO | 12,0 | - | - | - | 0,3 |
| B₂O₃ | 18,4 | 17,6 | 175 | 13,2 | 2,4 |
| Al₂O₃ | 3,8 | 4,8 | 1,1 | 0,2 | 1,0 |
| SiO₂ | 36,9 | 55,0 | 54,0 | 48,1 | 64,5 |
| TiO₂ | - | - | - | 3,8 | 5,2 |
| ZrO₂ | - | - | - | 9,1 | 4,0 |
| P₂O₅ | 0,5 | 0,9 | 1,2 | - | - |
| F | 3,4 | 0,9 | 1,9 | 2,3 | 3,1 |
| CoO | 0,5 | 0,7 | 1,0 | 0,7 | - |
| NiO | 1,1 | 0,9 | 3,5 | 0,5 | - |
| CuO | 0,7 | - | 1,0 | 0,5 | - |
| MnO | 0,3 | 1,0 | 0,8 | 0,4 | - |
| Fe₂O₃ | 0,5 | - | 0,1 | 0,1 | - |
| MoO₃ | - | - | - | - | 1,2 |
| | Low viscosity, ground coat | High viscosity, ground coat | Medium viscosity, ground coat | Chemical resistant, ground coat | Chemical resistant, cover coat |

**Table 3: Preparation of mill batches**

| | | | | |
|---|---|---|---|---|
| Slips were prepared using the ingredients listed in Table 1 and 2. Ingredients amounts were given in parts by weight of total frit content. Ingredients were ground in ball mills to the specific fineness respectively. | | | | |

| Ingredients | Slip A | Slip B | Slip C | Slip D |
|---|---|---|---|---|
| Frit A | 35 | 35 | -- | -- |
| Frit B | -- | -- | 35 | -- |
| Frit C | 65 | -- | -- | -- |
| Frit D | -- | 35 | -- | -- |
| Frit E | -- | 30 | -- | -- |
| Frit F | -- | -- | 65 | -- |
| Frit G | -- | -- | -- | 100 |
| Silica | 10 | 20 | 40 | 5 |
| Clay | 2,5 | 10 | 6 | 5 |
| Colloidal silica | 1,5 | -- | -- | -- |
| Sodium Aluminate | -- | -- | -- | 0,2 |
| Potassium carbonate | 0,3 | -- | -- | 0,2 |
| Borax | -- | 0,2 | 0,2 | -- |
| Boric acid | -- | 0,2 | 0,2 | -- |
| Sodium nitrite | 0,15 | 0,2 | 0,2 | 0,2 |
| Milling fineness* | 1 to 2 % on 38µm | 3 to 4 % on 102µm | 3 to 4 % on 102µm | 3 to 4 % on 102µm |

| | | | | |
|---|---|---|---|---|
| * Residue on sieve | | | | |

### Steel :

Steel was of non enameling grade, hot rolled S235 (according to EN10025). Steel thickness was 1,8 mm. Steel plates were 150x150 mm².

### Steel pre-treatment:

Steel plates were degreased to remove all organic compound used for forming and shaping plates.

### Example 1:

Multi layer process - ground coat and chemical resistant cover coat.

The ground coat slip A according to Table 3 was applied by wet spraying on pretreated S235 steel plates as defined above. Application wet weight was 150 to 250 g/m². Prior to drying the cover coat slip D was sprayed over the wet ground coat. Cover coat application wet weight was 600 to 700 g/m². Steel plates were coated on both sides. Wet coated plates were dried under infrared driers for 20 minutes. Plates were fired in a box furnace at 840°C for 6 minutes.

### Example 2:

### Ground coat.

The ground coat slip B was applied by wet spraying on pre-treated S235 steel plates as defined above. Application wet weight was 450 to 550 g/m² on both sides. Wet coated plates were dried under infrared driers for 20 minutes. Plates were fired in a box furnace at 840°C for 6 minutes.

### Example 3:

### Chemical resistant ground coat.

The ground coat slip C was applied by wet spraying on pre-treated S235 steel plates as defined above. Application wet weight were 600 to 700 g/m² on both sides. Wet coated plates were dried under infrared driers for 20 minutes. Plates were fired in a box furnace at 860°C for 10 minutes.

All plates of examples 1, 2, 3 did not show any fish scale defect after cooling down and after aging 24 months at room temperature.

## Claims

1. Use of a porcelain enamel frit for the preparation of enamel coated steel surfaces for directly applying said enamel on both sides of steel sheets having TH values below 100 according to EU standard EN 10209 consisting in parts per weight of
| Elements | |
|---|---|
| Li₂O | 2,0 |
| Na₂O | 27,3 |
| CaO | - |
| B₂O₃ | 10,6 |
| SiO₂ | 52,9 |
| ZrO₂ | - |
| F | - |
| NiO | 7,2 |
| CoO | - |
| CuO | - |
| Total | 100,0 |
or
| Elements | |
|---|---|
| Li₂O | 2,0 |
| Na₂O | 23,1 |
| CaO | 3,0 |
| B₂O₃ | 10,5 |
| SiO₂ | 43,8 |
| ZrO₂ | 9,1 |
| F | 2,0 |
| NiO | 7,1 |
| CoO | 0,1 |
| cuO | 0,1 |
| Total | 100,8 |
wherein said porcelain enamel frit is contained in a minimum of 20 weight % and the remaining constituents being other frits and/or milling additions.

## Patentansprüche

1. Verwendung einer Porzellan-Emaille-Fritte zur Herstellung von emaillierten Stahloberflächen zum direkten Auftragen der Emaille auf beide Seiten von Stahlblechen mit TH-Werten unter 100 gemäß EU-Norm EN 10209, in Gewichtsteilen bestehend aus:
| Elemente | |
|---|---|
| Li₂O | 2,0 |
| Na₂O | 27,3 |
| CaO | - |
| B₂O₃ | 10,6 |
| SiO₂ | 52,9 |
| ZrO₂ | - |
| F | - |
| NiO | 7,2 |
| CoO | - |
| CuO | - |
| Gesamt | 100,0 |
oder
| Elemente | |
|---|---|
| Li₂O | 2,0 |
| Na₂O | 23,1 |
| CaO | 3,0 |
| B₂O₃ | 10,5 |
| SiO₂ | 43,8 |
| ZrO₂ | 9,1 |
| F | 2,0 |
| NiO | 7,1 |
| CoO | 0,1 |
| CuO | 0,1 |
| Gesamt | 100,8 |
wobei die Porzellan-Emaille-Fritte in einem Minimalanteil von 20 Gew.-% enthalten ist und die übrigen Bestandteile andere Fritten und/oder Mahlzusätze sind.

## Revendications

1. Utilisation d'une fritte d'émail de porcelaine pour la préparation de surfaces d'acier émaillées pour l'application directe dudit émail sur les deux côtés de tôles d'acier ayant des valeurs de TH inférieures à 100 selon la norme UE EN 10209, consistant en parties en poids en :
| éléments | |
|---|---|
| Li₂O | 2,0 |
| Na₂O | 27,3 |
| CaO | - |
| B₂O₃ | 10,6 |
| SiO₂ | 52,9 |
| ZrO₂ | - |
| F | - |
| NiO | 7,2 |
| CoO | - |
| CuO | - |
| total | 100,0 |
ou
| éléments | |
|---|---|
| Li₂O | 2,0 |
| Na₂O | 23,1 |
| CaO | 3,0 |
| B₂O₃ | 10,5 |
| SiO₂ | 43,8 |
| ZrO₂ | 9,1 |
| F | 2,0 |
| NiO | 7,1 |
| CoO | 0,1 |
| CuO | 0,1 |
| total | 100,8 |
dans laquelle ladite fritte d'émail de porcelaine est contenue en une proportion minimale de 20 % en poids, et les autres constituants sont d'autres frittes et/ou additifs de broyage.
